# EUROPEAN PATENT APPLICATION

(11) **EP 4 621 346 A1**
(43) Date of publication of application: **24.09.2025**
(21) Application number: 23891419.6
(22) Date of filing: 07.11.2023
(51) Int. Cl.: F41J 5/02, F41J 3/02, F41J 5/04, F41J 5/06, G06N 20/00

(54) **HIT LOCATION ESTIMATION SYSTEM AND HIT LOCATION ESTIMATION METHOD**

(30) Priority: 14.11.2022 JP 2022181945
(71) Applicant: Kabushiki Kaisha Dartslive D/B/A Dartslive Co., Ltd., Tokyo 141-0033 (JP); Sega Corporation, Tokyo 144-0033 (JP)
(72) Inventor: KAWAMURA, Hiroaki, Tokyo 141-0033 (JP); MUNETO, Daiki, Tokyo 141-0033 (JP); MASUBUCHI, Hisakazu, Tokyo 141-0033 (JP); KOJIMA, Yoshitaka, Tokyo 141-0033 (JP); ONO, Masakazu, Tokyo 141-0033 (JP); NAKAMURA, Yoshihiro, Tokyo 141-0033 (JP)
(74) Representative: Treeby, Philip David William
(86) International application number: PCT/JP2023/040016
(87) International publication number: WO 2024/106267

(57) **Abstract**

A location hit by a throwing instrument is estimated with higher accuracy. A hit location estimation system includes a storage unit that stores a machine-trained machine learning model configured to output, when image data generated on the basis of capturing of an image of a target upon throwing of a throwing instrument in a throwing game and detection data generated on the basis of detection of contact of the thrown throwing instrument with the target or another object is input to the machine learning model, a result of estimating a location on the target hit by the throwing instrument, an image capturing unit that generates the image data on the basis of the capturing of the image of the target upon the throwing of the throwing instrument in the throwing game, a detection unit that generates the detection data on the basis of the detection of the contact of the thrown throwing instrument with the target or the other object, an acquisition unit that acquires the result of estimating the location on the target hit by the throwing instrument, the result being output by inputting the image data and the detection data to the machine learning model, and a display unit that displays the estimation result.

## Description

### Technical Field

The present invention relates to a technology of estimating a hit location of a throwing instrument in a throwing game.

### Background Art

There has conventionally been known a throwing game device for playing a throwing game in which throwing instruments, such as darts, are thrown at a target, and a competition of throwing skills is performed on the basis of scores set according to locations on the target hit by the throwing instruments. With regard to such a throwing game device, various technologies have been proposed to determine locations hit by throwing instruments.

As a technology of estimating locations hit by throwing instruments, a method using a machine learning model, such as deep learning, is conceivable. With regard to a technology of estimating a location of an object by using a machine learning model, Patent Literature 1 describes, e.g., a location estimation device that estimates a location of an object on the basis of an image photographed by a monocular camera for overhead view. The location estimation device uses a machine learning model, which is machine-trained by deep learning, to execute image recognition on an acquired image and detect a location of an object to be detected in a frame.

### Citation List

### Patent Literature

Patent Literature 1: Patent Publication JP-A-2022-125973

### Summary of Invention

### Technical Problem

The method described in Patent Literature 1 mentioned above is limited to solely using only an image obtained by capturing an image of the object as an input to the machine learning model. With regard to this point, the inventors of the present invention have found that, when a throwing instrument that has been thrown comes into contact with the target or another object, various sounds, impacts, and the like according to a location of the contact are generated, and a result of detecting these physical phenomena is also useful in estimating a location hit by the throwing instrument.

An aspect of the present invention has been made in view of the problem described above, and it is an object thereof to estimate a location hit by a throwing instrument with higher accuracy.

### Solution to Problem

A hit location estimation system according to the aspect of the present invention is a hit location estimation system including: a storage unit that stores a machine-trained machine learning model configured to output, when image data generated on the basis of capturing of an image of a target upon throwing of a throwing instrument in a throwing game and detection data generated on the basis of detection of contact of the thrown throwing instrument with the target or another object is input thereto, a result of estimating a location on the target hit by the throwing instrument; an image capturing unit that generates the image data on the basis of the capturing of the image of the target upon the throwing of the throwing instrument in the throwing game; a detection unit that generates the detection data on the basis of the detection of the contact of the thrown throwing instrument with the target or the other object; an acquisition unit that acquires the result of estimating the location on the target hit by the throwing instrument, which is output by inputting the image data and the detection data to the machine learning model; and a display unit that displays the estimation result.

According to the configuration described above, in the estimation of the location hit by the throwing instrument using the machine-trained machine learning model, not only the image data, but also the detection data is included in the input data. This allows the location hit by the throwing instrument to be estimated with higher accuracy.

### Advantageous Effect of Invention

According to the aspect of the present invention, it is possible to estimate a location hit by a throwing instrument with higher accuracy.

### Brief Description of Drawings

[Figure 1] Figure 1 is a schematic front view illustrating an example of an outer appearance of a dart game device 30.
[Figure 2] Figure 2 is a schematic diagram illustrating an example of an outer appearance of a dart board 31.
[Figure 3] Figure 3 is a block diagram illustrating an example of a configuration of the dart game device 30.
[Figure 4] Figure 4 is a functional block diagram illustrating an example of functional units included in a control device 44.
[Figure 5] Figure 5 is a diagram schematically illustrating an example of input/output data to/from a machine learning model 121.
[Figure 6] Figure 6 is an operation flow chart for illustrating an example of a generation method of the machine learning model 121.
[Figure 7] Figure 7 is an operation flow chart for illustrating an example of an estimation method of a hit location.
[Figure 8] Figure 8 is a diagram illustrating an example of a screen 200 displayed on a display device 34.
[Figure 9] Figure 9 is a diagram illustrating an example of a screen 300 displayed on the display device 34.

### Description of Embodiments

### (1) Configuration

### (1-1) Overall Configuration of Dart game Device 30

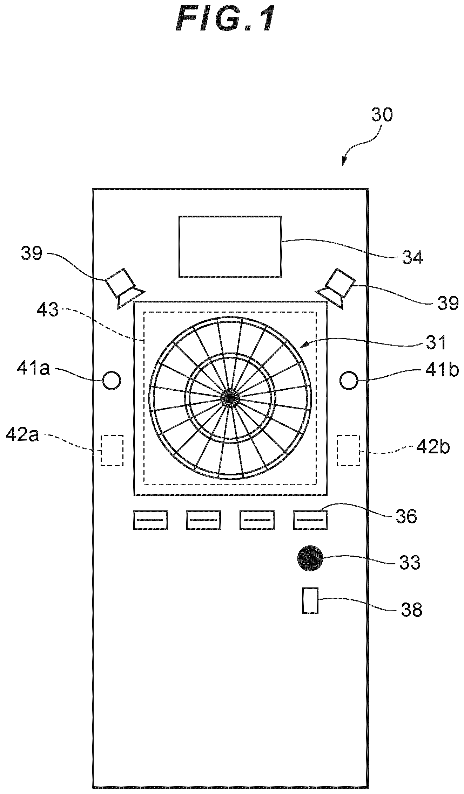

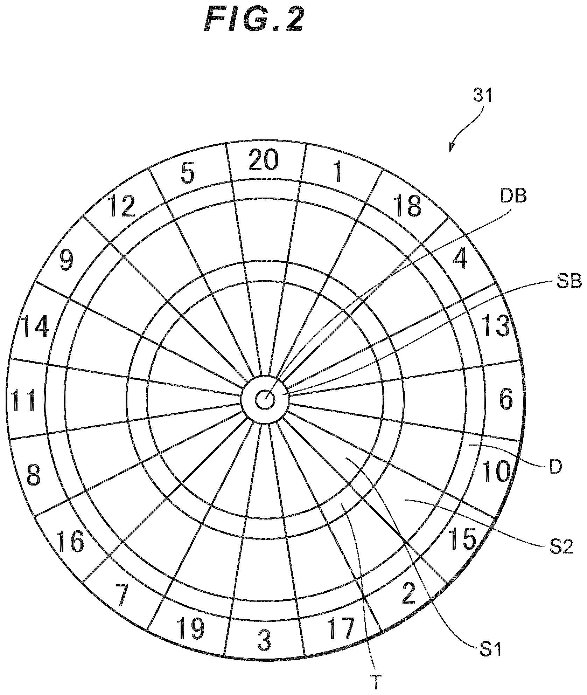

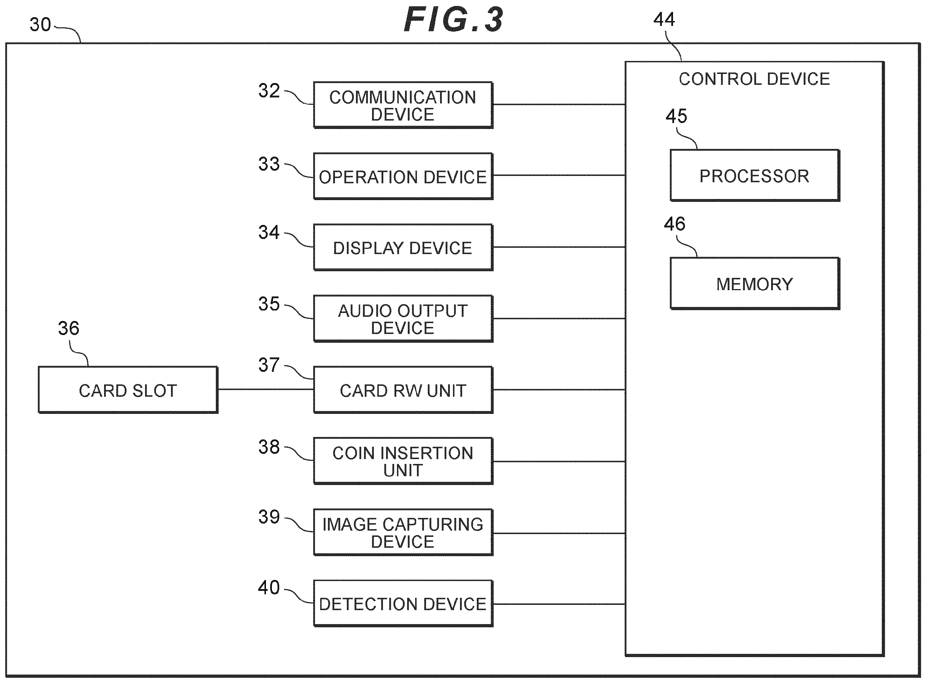

Referring to Figures 1 to 3, a description will be given of an overall configuration of a dart game device 30 according to the present embodiment. Figure 1 is a schematic front view illustrating an example of an outer appearance of the dart game device 30. Figure 2 is a schematic diagram illustrating an example of an outer appearance of a dart board 31. Figure 3 is a block diagram illustrating an example of the configuration of the dart game device 30.

The dart game device 30 is a device for playing a dart game, which is an example of a throwing game, and is configured to include various components inside and outside a generally cubic housing. The dart game device 30 includes, e.g., the dart board 31, a communication device 32, an operation device 33, a display device 34, an audio output device 35, card slots 36, a card RW unit 37, a coin insertion unit 38, an image capturing device 39, a detection device 40, and a control device 44.

The dart board 31 is an example of a target, presents a generally circular shape as schematically illustrated in Figure 2, and is provided with a plurality of segments delimited by distances and directions thereof from a center of the substantial circle. Each of these segments is defined by, e.g., a frame provided in the dart board 31 to erect therefrom. Each of the segments provided in the dart board 31 is provided with a plurality of receptacle holes each capable of receiving a dart as an example of throwing instrument. When the dart thrown by a player reaches any of the receptacle holes, the dart may be held in a mode in which a portion thereof is inserted in the receptacle hole. The segment including the receptacle hole in which the dart is held becomes a segment of the target hit with the dart by the player in the throwing, and a score according to the segment is given to the player.

At the center of the dart board 31, a substantially circular double bull segment DB and a single bull segment SB concentrically surrounding a circumference thereof are disposed. In addition, around the single bull segment SB, a plurality of substantially triangular inner single segments S1 are arranged. In addition, around the inner single segments S1, a plurality of substantially rectangular triple segments T are arranged. In addition, around the triple segments T, a plurality of generally rectangular outer single segments S2 are arranged. In addition, around the outer single segments S2, a plurality of substantially rectangular double segments D are arranged. To the inner single segments S1, the triple segments T, the outer single segments S2, and the double segments D, numbers differing from one direction to another from the center of the dart board 31 are added and, by combinations of the numbers and the types of the segments, the segments are identified.

The communication device 32 is a communication interface that performs communication with another information processing device or the like. Under the control of the control device 44, the communication device 32 communicates with the other information processing device or the like connected to the dart game device 30 via a communication path to be able to transmit/receive information to/from the dart game device 30. A method of the communication by the communication device 32 is not particularly limited, may be either wired communication or wireless communication, or may also be, e.g., Bluetooth (registered trademark), a wireless LAN (Local Area Network), a wired LAN, a WAN (Wide Area Network), a public line network, a mobile data communication network, or a combination thereof.

The operation device 33 is for the player or the like to perform various operations, and is configured to include, e.g., operation buttons provided on an operation panel or the like. For example, the operation device 33 in the present embodiment is operated by the player when selection is made among various dart games (such as, e.g., Zero One and Cricket).

The display device 34 is an example of an output device, and has a function of displaying various screens related to dart games on the basis of display data supplied from the control device 44. Specifically, the display device 34 may be, e.g., a liquid crystal display, an organic EL display, or the like.

The audio output device 35 is another example of the output device, and has a function of outputting voice (producing an audio output) related to the dart games on the basis of the audio signal supplied from the control device 44. Specifically, the audio output device 35 is configured to include, e.g., a speaker capable of amplifying the audio signal with a digital amplifier or the like to produce the audio output or the like.

Each of the card slots 36 is an insertion hole into which a game card possessed by the player is to be inserted. In the dart game device 30 in the present embodiment, the four card slots 36 are provided so as to allow up to four teams to play against each other (not intended to limit a maximum number of people). The game cards may also be configured to be able to record, e.g., identification information (ID) of the player, a game history, and the like. The card RW unit 37 is configured to be able to read and write, e.g., such information recorded on the game cards inserted in the card slots 36. Note that the dart game device 30 is not limited to a method of recording the ID of the player, the game history, and the like on the game cards, and it may also be possible to use a method in which, e.g., a server communicatively connected to the dart game device 30 or the like manages such information.

The coin insertion unit 38 includes an insertion hole into which coins are to be inserted and a sensor that detects the coins inserted from the insertion hole. In the present embodiment, a game can be played by the player by inserting a predetermined number of coins into the coin insertion hole. Note that the dart game device 30 may also be configured such that a game can be played by a method such as electronic payment using a prepaid payment means such as electronic money.

The image capturing device 39 is provided at a predetermined position with respect to the dart board 31, and is configured as, e.g., a camera having a lens, an image capturing element, and the like. Figure 1 illustrates the two image capturing devices 39, which are the image capturing device 39 provided on an upper left of the dart board 31 and the image capturing device 39 provided on an upper right of the dart board 31 each as the image capturing device 39 included in the dart game device 30. However, the number of the image capturing devices 39 included in the dart game device 30 is not limited to 2, may be 1, or may also be not less than 3.

The image capturing devices 39 are included, together with an image capturing control unit 111 included in the control device 44 and described later, in an image capturing unit. Each of the image capturing devices 39 captures an image of at least one portion of the dart board 31 on the basis of a control signal (image capturing control signal) supplied from the image capturing control unit 111 to generate an image capturing signal and supply the image capturing signal to the image capturing control unit 111. The image capturing device 39 may also, e.g., continuously generate the image capturing signal at each predetermined period during an image capturing operation and supply the image capturing signal to the image capturing control unit 111. Note that the image capturing device 39 may also be configured to be capable of panning (moving a viewpoint) and zooming (enlargement/reduction).

The detection device 40 is a device for detecting throwing of the dart. The detection device 40 is included, together with a detection control unit 112 included in the control device 44 and described later, in a detection unit. The detection device 40 detects, on the basis of a control signal (detection control signal) supplied from the detection control unit 112, a physical quantity change caused by contact of the thrown dart with the dart board 31 or another object to generate a detection signal, and supplies the detection signal to the detection control unit 112.

The detection device 40 may also be configured as any sensor. Figure 1 illustrates, as an example of the detection device 40, a microphone 41, an acceleration sensor 42, and a membrane switch 43. However, the dart game device 30 according to the present embodiment needs only to include, as the detection device 40, at least any one of the microphone 41, the acceleration sensor 42, the membrane switch 43, and another detection device.

For example, the microphone 41 is configured to be able to detect a sound caused by the contact of the thrown dart with the dart board 31 or the other object and generate an audio waveform as the detection signal. Figure 1 illustrates, as the microphone 41 included in the dart game device 30, a microphone 41a provided on a left side of the dart board 31 and a microphone 41b provided on a right side of the dart board 31. However, the number of the microphones 41 included in the dart game device 30 is not limited thereto, may be 0, or may also be 1 or not less than 3.

The microphone 41 may also detect, e.g., the sound caused by the contact of the dart with the dart board 31. In this case, the microphone 41 may also detect the sound irrespective of whether or not the dart is held by the dart board 31. As described above, each of the segments provided in the dart board 31 is delimited by the distance and direction thereof from the center of the dart board 31. Accordingly, the sound caused by contact of the dart with each of the segments may include a feature value (e.g., a feature value in a frequency spectrum of the audio waveform) specific to each of the segments.

The microphone 41 may also detect, e.g., a sound caused by contact of the dart with any component other than the dart board 31. The component with which the dart comes into contact is not particularly limited, and may be, e.g., a component of the dart game device 30 other than the dart board 31, a portion of a building such as a floor, a wall, or a ceiling around the dart game device 30, or any structure placed around the dart game device 30. Even when the component is any of these components other than the dart board 31, the sound caused by the contact of the dart with such a component may have a feature value (e.g., a feature value in the frequency spectrum of the audio waveform) specific to each of the components.

For example, the acceleration sensor 42 is configured to be able to detect an impact (including vibration) caused by the contact of the thrown dart with the dart board 31 or another object and generate an impact waveform (vibration waveform) as the detection signal. Figure 1 illustrates, as the acceleration sensor 42 included in the dart game device 30, an acceleration sensor 42a provided on the left side of the dart board 31 and an acceleration sensor 42b provided on the right side of the dart board 31. However, the number of the acceleration sensors 42 included in dart game device 30 is not limited thereto, may be 0, or may also be 1 or not less than 3.

The acceleration sensor 42 may also detect, e.g., an impact caused by the contact of the dart with the dart board 31. For example, the impact generated at the dart board 31 reaches the acceleration sensor 42 via the various components of the dart game device 30 to be detected by the acceleration sensor 42. **In** this case, the acceleration sensor 42 may also detect the impact irrespective of whether or not the dart is held by the dart board 31. As described above, each of the segments provided in the dart board 31 is delimited by the distance and direction thereof from the center of the dart board 31. Accordingly, the impact caused by the contact of the dart with each of the segments may have a feature value (e.g., a feature value in a frequency spectrum of an impact waveform) specific to each of the segments.

The acceleration sensor 42 may also detect, e.g., the impact caused by the contact of the dart with any component other than the dart board 31. For example, the impact caused at any component other than the dart board 31 reaches the acceleration sensor 42 via the dart game device 30 and various other components to be detected by the acceleration sensor 42. The component with which the dart comes into contact is not particularly limited, and may be, e.g., a component of the dart game device 30 other than the dart board 31, a portion of a building such as a floor, a wall, or a ceiling around the dart game device 30, or any structure placed around the dart game device 30. Even when the component is any of these components other than the dart board 31, the impact caused by the contact of the dart with such a component may have a feature value (e.g., a feature value in the frequency spectrum of the impact waveform) specific to each of the components.

For example, the membrane switch 43 is configured to be able to detect a pressure caused by the contact of the thrown dart with the dart board 31 (including a case where the dart is held thereby) and exerted on the dart board 31, and generate an electric signal as the detection signal. Note that a method of the detection of the pressure by the membrane switch 43 may also include detection of a binary value representing whether or not the pressure is equal to or more than a predetermined threshold. For example, the membrane switch 43 may also be configured by stacking a plurality of electric contact points which are energized by the pressure applied from the outside and membrane sheets. For example, when the dart comes into contact with the dart board 31, the electric contact points are energized to generate an electric signal as the detection signal. For example, the electric contacts included in the membrane switch 43 may also be able to generate an electric signal specific to the contact points. In this case, on the basis of the electric signal, a location of the thrown dart can also be detected.

### (1-2) Functional Configuration of Control Device 44

The control device 44 includes a processor 45 and a memory 46 to generally control the various components included in the dart game device 30. For example, the processor 45 may be configured to include a CPU (Central Processing Unit) and execute a program stored in the memory 46. For example, the memory 46 may include a ROM (Read Only Memory) in which various programs and the like are stored and a RAM (Random Access Memory) which functions as a data storage region and a work area of the processor. Note that the program mentioned above may also be able to be stored on a non-transitory recording medium such as a USB memory or a CD-ROM. Alternatively, the program described above may also be supplied to the memory 46 via any transmission medium (such as a communication network or a broadcast wave) capable of transmitting the program. Note that an aspect of the present invention may also be implemented in the form of a data signal embedded in a carrier wave, which is the program mentioned above embodied by electronic transmission.

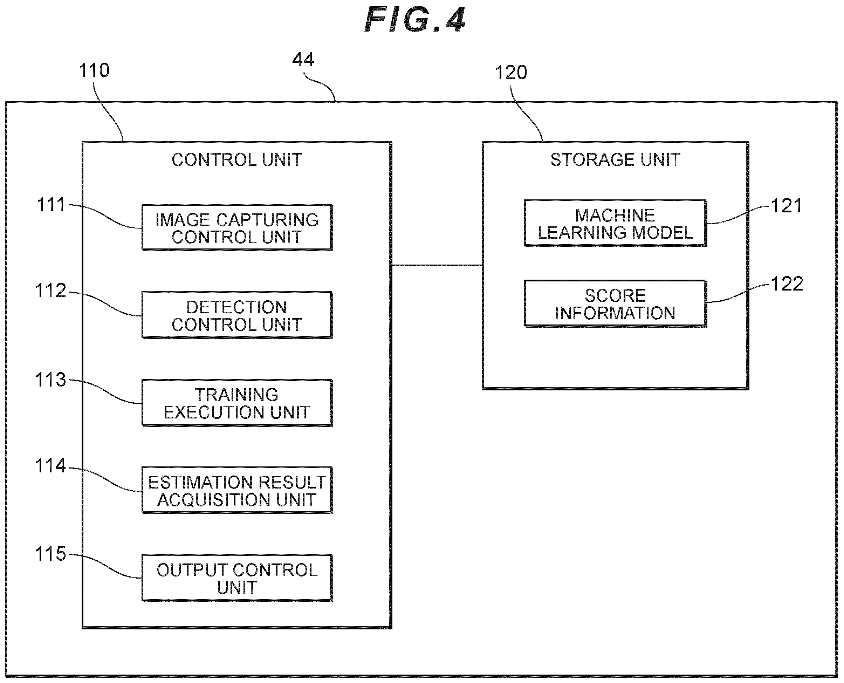

Figure 4 is a functional block diagram illustrating an example of functional units included in the control device 44. For example, the control device 44 includes a control unit 110 and a storage unit 120 as the functional units implemented by the processor 45, the memory 46, and the like.

The storage unit 120 is a storage device that stores data required for processing in the dart game device 30. For example, the storage unit 120 stores various programs such as a program for progression of a dart game and a program for the dart game device 30 to implement a method of estimating the hit location. In addition, the storage unit 120 stores a machine learning model 121 and score information 122 indicating a score of each player in a throwing game.

The control unit 110 generally controls the various components included in the dart game device 30 on the basis of the various programs stored in the storage unit 120. The control unit 110 includes the image capturing control unit 111, the detection control unit 112, a training execution unit 113, an estimation result acquisition unit 114, and an output control unit 115.

The image capturing control unit 111 supplies a control signal to the image capturing device 39 to control image capturing by the image capturing device 39 and generate image data on the basis of the image capturing signal acquired from the image capturing device 39. When the dart game device 30 has a plurality of the image capturing devices 39, the image capturing control unit 111 may generate the image data for each of the image capturing devices 39 and combine the individual image capturing signals acquired from the plurality of image capturing devices 39 to generate the image data. The image capturing control unit 111 may also extract any of the image capturing signals acquired from the image capturing devices 39 and generate partial image data. The image capturing control unit 111 may also cause the image data to include time information indicating a time of the image capturing.

The detection control unit 112 supplies a control signal to the detection device 40 such as the microphone 41, the acceleration sensor 42, or the membrane switch 43 to control detection by the detection device 40 and generate detection data on the basis of the detection signal acquired from the detection device 40. For example, the detection control unit 112 may generate the detection data of the audio waveform generated by the microphone 41 on the basis of the audio waveform. Alternatively, the detection control unit 112 may also generate the detection data of the impact waveform generated by the acceleration sensor 42 on the basis of the impact waveform. Still alternatively, the detection control unit 112 may also generate the detection data of the electric signal generated by the membrane switch 43 on the basis of the electric signal. The detection control unit 112 may also cause the detection data to include the time information indicating a time of the detection.

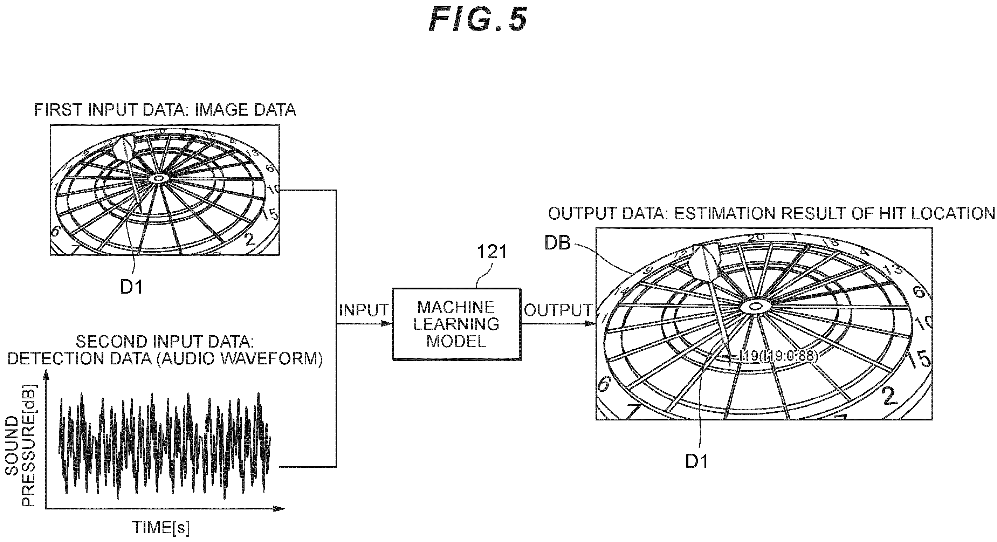

The training execution unit 113 executes machine training using predetermined supervisory data to generate the machine learning model 121. Referring to Figure 5, a description will be given of an outline of the machine learning model 121 according to the present embodiment. Figure 5 is a diagram schematically illustrating an example of input/output data to/from the machine learning model 121.

For example, the machine learning model 121 may also be configured as a multimodal model, i.e., a model including, in the input data, two data sets in different representation formats (modalities). For example, the input data may also include input data (first input data) in a first representation format and input data (second input data) in a second representation format.

The representation format (first representation format) of the first input data may be an image. In other words, the first input data may be, e.g., the image data generated by the image capturing control unit 111 or image data obtained by performing predetermined pre-processing on the image data. In an upper left portion of Figure 5, as an example of the first input data, image data obtained by capturing images of a dart board DB and a dart D1 is illustrated.

The representation format (second representation format) of the second input data may be a representation format other than an image. In particular, the second input data may be, e.g., the detection data (such as the detection data of the audio waveform, the detection data of the impact waveform, or the detection data of the electric signal) generated by the detection control unit 112, the detection data obtained by performing predetermined pre-processing on the detection data, or the like. In a lower left portion of Figure 5, as an example of the second input data, audio waveform data when the dart D1 comes into contact with (hits) the dart board DB is illustrated.

Output data from the machine learning model 121 includes a result of estimating a hit location. It is to be noted herein that the result of estimating the hit location may also include, e.g., information indicating at least one estimated hit location. For example, the information indicating the hit location may be information indicating the segment provided in the dart board, or may also be information indicating coordinates of the hit location. A format of the coordinates is not particularly limited, and may be, e.g., two-dimensional coordinates in the image data serving as the input data or three-dimensional coordinates in a space in which the dart board is placed. The result of estimating the hit location may also include a degree of reliability of each hit location. A method of calculating the degree of reliability is not particularly limited, and a method using, e.g., an activating function such as a sigmoid function or a soft-max function or the like may also be used. In other words, the degree of reliability may also be said to be a probability of occurrence of the hit location. On a right side of Figure 5, as an example of the output data (result of estimating the hit location), display of the hit location "I19" on the dart board DB, which indicates the inner single segment with a number "19" hit by the dart D1, and a number "0.88", which indicates the degree of reliability of the estimation result, are shown.

Thus, the machine learning model 121 also includes, in the input data, data in the representation format other than the image and, accordingly, accuracy of the estimation of the hit location can be improved compared to that in a case where only data in the image representation format is included in the input data.

Note that the machine learning model 121 may also be configured as a model including, in the input data, three or more data sets in different representation formats. In the machine learning model 121, e.g., it may also be possible that the first input data is the image data, the second input data is any of the detection data sets (e.g., the detection data set of the audio waveform), and input data (third input data) in a third representation format is any of the other detection data sets (e.g., the detection data set of the impact waveform).

Returning to Figure 4, the training execution unit 113 executes the machine training using the supervisory data including the first input data and the second input data to generate the machine learning model 121.

The first input data included in the supervisory data may be the image data generated by the image capturing control unit 111, or may also be image data acquired from another information processing device or the like via the communication device 32. The image data acquired from the other information processing device or the like need not necessarily be the image data generated by capturing an image of the dart board 31, and may also be image data generated by capturing an image of another dart board of the same type or a different type or image data generated by predetermined computer graphics (CG) or the like. The first input data included in the supervisory data, such as the image data, may also include information indicating the location on the dart board hit by the dart as a label. The information may be represented by, e.g., the segment of the dart board hit by the dart, or may also be represented by coordinates of the location hit by the dart.

The second input data included in the supervisory data may be the detection data generated by the detection control unit 112, or may also be detection data acquired from another information processing device or the like via the communication device 32. The detection data acquired from the other information processing device or the like need not necessarily be detection data generated on the basis of the detection signal detected when a dart was thrown at the dart board 31, and may be detection data generated by using another dart board or dart of the same type or a different type, or may also be detection data generated by predetermined simulation. The second input data included in the supervisory data, such as the detection data, may also include information indicating a location on the dart board hit by the dart as a label. The information may be represented by, e.g., the segment of the dart board hit by the dart, or may also be represented by coordinates of the location hit by the dart.

The machine learning model 121 can optionally be configured by using a known technology, such as a method of using a deep Boltzmann machine or a plurality of classifiers. Specifically, the machine learning model 121 may also be configured to include, e.g., a first neural network corresponding to the first input data such as the image data, a second neural network corresponding to the second input data such as the detection data, and an integration layer that integrates an output from the first neural network and an output from the second neural network with each other.

The estimation result acquisition unit 114 uses the machine learning model 121 to estimate the hit location. Specifically, the estimation result acquisition unit 114 inputs, e.g., predetermined input data to the machine learning model 121, and acquires the result of estimating the hit location output therefrom. The input data is configured according to a configuration of the machine learning model 121 described above. In other words, the input data may be configured to include two data sets in different representation formats (modalities). For example, the input data may be configured to include the input data (first input data) in the first representation format and the input data (second input data) in the second representation format.

The representation format (first representation format) of the first input data may be, e.g., the image. In other words, the first input data may be, e.g., the image data generated by the image capturing control unit 111 or image data obtained by performing the predetermined pre-processing on the image data. Meanwhile, the representation format (second representation format) of the second input data may be, e.g., a representation format other than the image. In particular, the second input data may be, e.g., the detection data (such as the detection data of the audio waveform, the detection data of the impact waveform, or the detection data of the electric signal) generated by the detection control unit 112, detection data obtained by performing the predetermined pre-processing on the detection data, or the like.

Alternatively, the input data may also be configured to include three or more data sets in different representation formats. For example, it may also be possible that the first input data is the image data, the second input data is any of the detection data sets (e.g., the detection data set of the audio waveform), and the input data (third input data) in the third representation format may be any of the other detection data sets (e.g., the detection data set of the impact waveform).

For example, the estimation result acquisition unit 114 may generate the input data on the basis of the image data generated by the image capturing control unit 111 and the detection data generated by the detection control unit 112. It may also be possible that the estimation result acquisition unit 114 compares respective time information sets included in the image data and the detection data to each other and associates the image data and the detection data with each other to form an input data set when a time information difference is less than a predetermined threshold. The estimation result acquisition unit 114 may also, e.g., input the input data to the machine learning model 121 to thereby acquire the result of estimating the hit location output from the machine learning model 121.

The output control unit 115 controls outputs from the various output devices. For example, the output control unit 115 may also have a function of a display control unit that controls display by the display device 34. Specifically, the output control unit 115 generates display data in a predetermined screen to be displayed by the display device 34, and causes the display device 34 to display the predetermined screen on the basis of the display data. The screen displayed by the display device 34 may also include, e.g., the estimation result (such as a numerical value or text) output from the machine learning model 121. Alternatively, the screen displayed by the display device 34 may also include an image of the dart board 31, and may also be in a mode in which the result of estimating the hit location is superimposed on the image. Note that the image of the dart board 31 may be an image generated by capturing an image of the dart board 31 on the basis of the image data input to the machine learning model 121, or may also be a schematic image generated by CG or the like to represent the dart board 31.

For example, the output control unit 115 may also have a function of an audio output control unit that controls an audio output from the audio output device 35. Specifically, the output control unit 115 generates predetermined audio data to be audibly output from the audio output device 35 and causes the audio output device 35 to output predetermined voice on the basis of the audio data. **The** voice audibly output from the audio output device 35 may also include, e.g., voice reading out the estimation result (such as the numerical value or text) output from the machine learning model 121, sound effects according to the estimation result, and the like.

For example, the output control unit 115 may also calculate the score gained by each of the players through throwing on the basis of the estimation result output from the machine learning model 121, and register the score in the score information 122 stored in the storage unit 120.

### (2) Operation

### (2-1) Machine Learning Model Generation Method

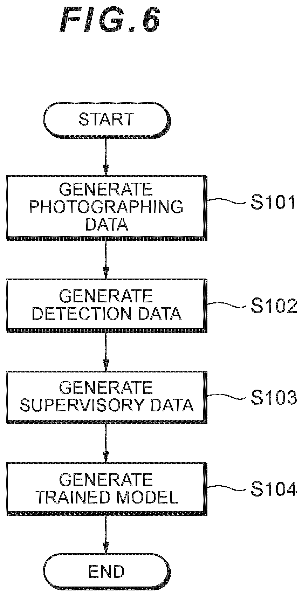

Figure 6 is an operation flow chart for illustrating an example of a generation method of the machine learning model 121. Note that some of steps may also be performed in parallel or in rearranged order. By way of example, the following will describe a case where the first input data is the image data, while the second input data is the detection data.

### (S101)

The training execution unit 113 acquires the image data and stores the acquired image data in the storage unit 120. The image data may be the image data generated by the image capturing control unit 111, and may also include information on a time when the image capturing control unit 111 generated the image data. Alternatively, the image data may also be the image data acquired from another information processing device or the like via the communication device 32. The image data acquired from the other information processing device or the like need not necessarily be the image data generated by capturing an image of the dart board 31, and may also be the image data generated by capturing an image of another dart board of the same type or a different type or the image data generated by the predetermined computer graphics (CG) or the like.

### (S102)

The training execution unit 113 acquires the detection data and stores the acquired detection data in the storage unit 120. The detection data may be the detection data generated by the detection control unit 112 or may also include information on a time when the detection control unit 112 generated the detection data. Alternatively, the detection data may also be the detection data acquired from another information processing device or the like via the communication device 32. The detection data acquired from the other information processing device or the like need not necessarily be the detection data generated on the basis of the detection signal detected when a dart was thrown at the dart board 31, and may also be the detection data generated by using another dart board or dart of the same type or a different type or the detection data generated by predetermined simulation.

### (S103)

The training execution unit 113 generates the supervisory data on the basis of a plurality of the image data sets and a plurality of the detection data sets which are stored in the storage unit 120. When, e.g., the image data sets and the detection data sets are not associated with each other, the training execution unit 113 may also compare respective time information sets included in the individual image data sets and the individual detection data sets to each other and associate the image data sets and the detection data sets with each other when time information differences are less than a predetermined threshold. In addition, the training execution unit 113 acquires the label indicating the hit location (hit segment or coordinates), and then assigns the label to each of the image data sets, the detection data sets, the supervisory data, and the like according to the configuration of the machine learning model 121. The label may also be information input by the player, any manager, or the like by using the operation device of another information processing device connected via the operation device 33 of the dart game device 30 or the communication device 32.

### (S104)

The training execution unit 113 executes the machine training on the basis of the supervisory data generated in Step S103 to generate the machine learning model 121, and stores the machine learning model 121 in the storage unit 120.

### (2-2) Estimation Method of Hit Location

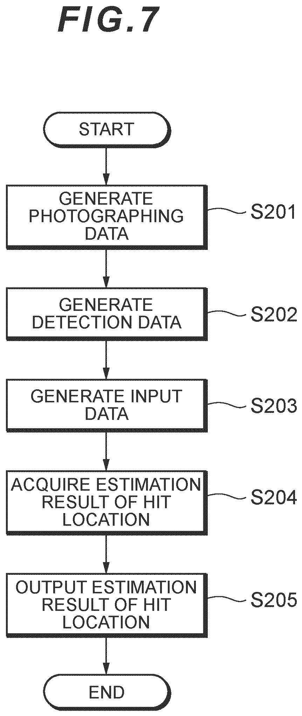

Figure 7 is an operation flow chart for illustrating an example of an estimation method of the hit location. Note that some of steps may also be performed in parallel or in rearranged order. By way of example, the following will describe the case where the first input data is the image data, and the second input data is the detection data.

### (S201)

The image capturing control unit 111 controls the image capturing device 39 to generate the image data on the basis of the image capturing signal acquired from the image capturing device 39. Timing with which the image data is to be generated is not particularly limited, and may also be, e.g., when an instruction to generate the image data is acquired via the communication device 32 or the like. The image capturing control unit 111 causes the image data to include the time information indicating the time of the image capturing.

### (S202)

The detection control unit 112 controls the detection device 40 to generate the detection data on the basis of the detection signal acquired from the detection device 40. Timing with which the detection data is to be generated is not particularly limited, and may also be, e.g., when an instruction to generate the detection signal is acquired via the communication device 32 or the like. The detection control unit 112 causes the detection data to include the time information indicating the time of the detection.

### (S203)

The estimation result acquisition unit 114 generates the input data on the basis of the image data and the detection data. The estimation result acquisition unit 114 may also compare the respective time information sets included in the image data and the detection data and associate the image data and the detection data with each other when a time information difference is less than a predetermined threshold to form an input data set.

### (S204)

For example, the estimation result acquisition unit 114 may also input the input data to the machine learning model 121 to acquire the result of estimating the hit location output from the machine learning model 121. The estimation result of the hit location may also include, e.g., information indicating at least one estimated hit location. The information indicating the hit location may be, e.g., information indicating the segment provided in the dart board, or may also be information indicating coordinates of the hit location. A format of the coordinates is not particularly limit. Alternatively, the estimation result of the hit location may also include a probability (degree of reliability) of each hit location.

### (S205)

The output control unit 115 controls the various output devices to output the estimation results. For example, the output control unit 115 generates the display data in the predetermined screen to be displayed on the display device 34, and causes the display device 34 to display the predetermined screen on the basis of the display data.

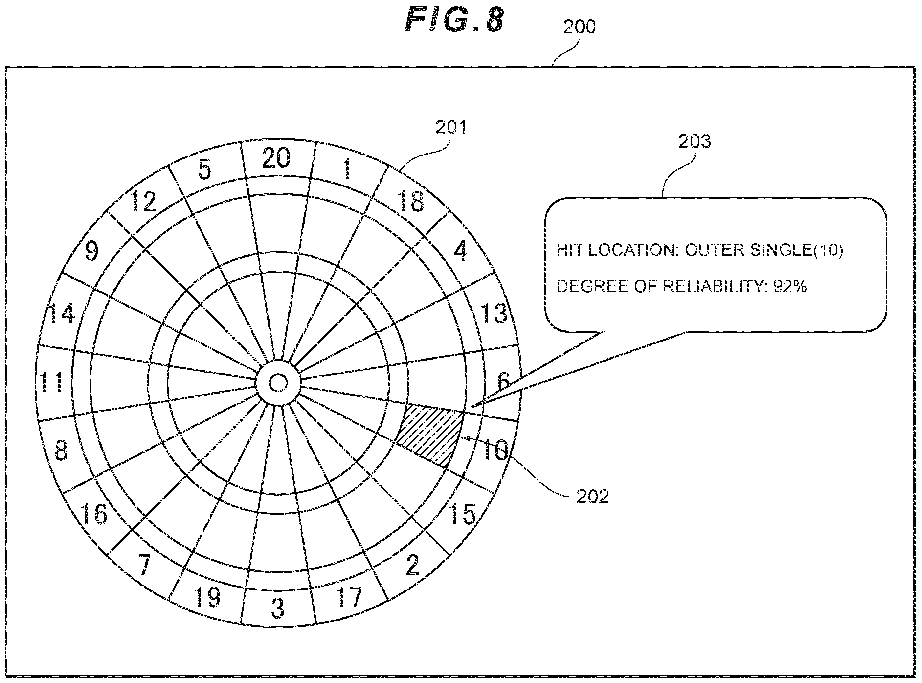

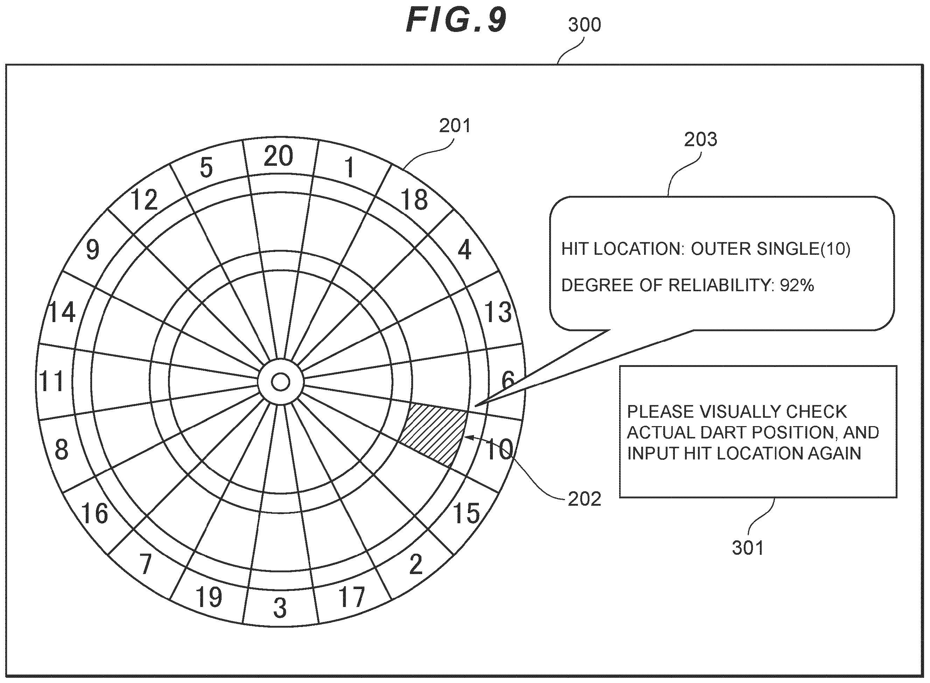

Figure 8 is a diagram illustrating an example of a screen 200 to be displayed on the display device 34. The screen 200 includes a schematic image 201 of the dart board and a display portion 203 for the estimation result of the hit location. The image 201 was generated by, e.g., CG or the like. In the image 201, the location hit by the dart may also be displayed in an accentuated manner. In the example illustrated in Figure 9, a portion of the outer single segment with the number 10 is hatched with oblique lines. The display portion 203 for the estimation result includes, as the estimation result, a text "HIT LOCATION: OUTER SINGLE (10)" indicating the hit location and a text "DEGREE OF RELIABILITY: 92%" indicating the degree of reliability. Note that the screen to be displayed on the display device 34 may also include an image generated by capturing an image of the dart board 31 based on the image data included in the input data to the machine learning model 121.

For example, the output control unit 115 may also generate predetermined audio data and cause the audio output device 35 to audibly output the voice reading out the estimation result (such as the numerical value or text) output from the machine learning model 121, the sound effects according to the estimation result, and the like on the basis of the audio data.

As has been described heretofore, according to the present embodiment, in the estimation of the location hit by the dart using the machine-trained machine learning model 121, not only the image data, but also the detection data is used as the input data. This allows the location to be more accurately estimated than when only the image is used as the input data.

### (3) Additional Notes

### [Additional Note 1]

It may also be possible that the input data to the machine learning model 121 does not include the image data, but includes at least any of the detection data sets.

For example, the input data to the machine learning model 121 may also be audio waveform data. In other words, the machine learning model 121 may also be configured to output a result of estimating a hit location on a dart board when a sound generated by a dart thrown in a dart game by coming into contact with the dart board or another object is input thereto.

As described above, each of the segments provided in the dart board is delimited by the distance and the direction thereof from the center of the dart board. Accordingly, the sound caused by the contact of the dart with each of the segments may include a feature value (e.g., feature value in the frequency spectrum of the audio waveform) specific to each of the segments. Meanwhile, in any component other than the dart board also, the sound caused by the contact of the dart with such a component may have a feature value (feature value in, e.g., the frequency spectrum of the audio waveform) specific to each component. As a result, even when the input data does not include the image data, but includes the audio waveform data, the machine learning model 121 can output the estimation result of the hit location with sufficient accuracy.

### [Additional Note 2]

The dart game device 30 may also determine whether or not the degree of reliability included in the estimation result of the hit location is equal to or more than a predetermined threshold, and then perform various processing according to the determination result.

When it is determined that the degree of reliability is less than the predetermined threshold, the output control unit 115 may also cause the output device to output predetermined information. For example, the output control unit 115 may also cause the display device 34 to display a screen 300 illustrated in Figure 9. The screen 300 mentioned herein includes, in addition to the schematic image 201 of the dart board included in the screen 200 illustrated in Figure 8 and the display portion 203 for the estimation result of the hit location, predetermined information 301 to be displayed when it is determined that the degree of reliability is less than the predetermined threshold. The information 301 includes a text "PLEASE VISUALLY CHECK ACTUAL DART POSITION, AND INPUT HIT LOCATION AGAIN". This is an example of information encouraging the player to input the actual dart position. For example, the player who views this text can check the actual hit location by visually checking the dart board 31 and directly input the actual hit location and a score based thereon by operating the operation device of another information processing device connected to the dart game device 30 via the operation device 33 or the communication device 32. It may also be possible that, e.g., information indicating the input actual hit location and the score is acquired by the control unit 110, and the control unit 110 updates the score information 122 stored in the storage unit 120 on the basis of the information.

When it is thus determined that the degree of reliability is less than the predetermined threshold, the output control unit 115 may also cause the display device 34 to display information promoting inputting of the actual location hit by the dart. Note that the information that the output control unit 115 causes the display device 34 to display when it is determined that the degree of reliability is less than the predetermined threshold is not limited to information promoting the inputting of the hit location, and may also include information directly or indirectly indicating that the degree of reliability of the estimation result of the hit location is low, an image for predetermined representation, and the like.

When it is determined that the degree of reliability is less than the predetermined threshold, the output control unit 115 may also cause the audio output device 35 to audibly output predetermined voice. The voice may be, e.g., voice reading out the information promoting the inputting of the actual location hit by the dart, voice reading out the information directly or indirectly indicating that the degree of reliability of the estimation result of the hit location is low, sound effects for the predetermined representation, or the like.

### [Additional Note 3]

**The** dart game device 30 may also determine whether or not the degree of reliability included in the estimation result of the hit location is equal to or more than the predetermined threshold, and then perform various processing based on the determination result.

When it is determined that the degree of reliability is less than the predetermined threshold, the image capturing control unit 111 may also generate image data (second image data) again. An image capturing region of the second image data may be the same as or different from, e.g., an image capturing region of the image data (first image data) included in the input data serving as a basis for the determination, which may specifically be a region including the entire dart board 31 or a region including at least one portion of the dart board 31.

The second image data may also be generated by performing image capturing. For example, the image capturing control unit 111 may also control the image capturing device 39 to acquire the image capturing signal having the image capturing region which is the same region as that of the first image data and generate the second image data on the basis thereof. Alternatively, for example, the image capturing control unit 111 may also perform control so as to change a viewpoint and a zoom magnification of the image capturing device 39, acquire the image capturing signal, and generate the second image data having a range different from that in the previous image data as the image capturing region. Specifically, the image capturing control unit 111 may also increase the magnification of the image capturing device 39 to generate image data by enlarging a partial range of the previous image data or may also reduce the magnification of the image capturing device 39 to generate the second image data which is wider in angle than the previous image data. Particularly when the magnification of the image capturing device 39 is to be increased, the image capturing region of the image capturing device 39 may also adjusted such that the hit location estimated by the machine learning model 121 is closer to a center of an image.

The second image data may also be generated on the basis of the first image data. For example, the control unit 110 may also perform various processing such as image quality adjustment or enlargement/reduction on the first image data to thereby generate the second image data. In this case, a region of the second image data may be the same as the region of the first image data, or may also be different from the region of the first image data. In particular, the region of the second image data may also include at least one portion of the dart board 31.

When the second image data is generated, the training execution unit 113 may also update the image data included in the supervisory data to the second image data, and then execute the machine training again to update the machine learning model 121. Then, the estimation result acquisition unit 114 may also use the updated machine learning model 121 to acquire the estimation result again, and the output control unit 115 may also cause the output device to output the estimation result acquired again.

### [Additional Note 4]

Some of the components included in the dart game device 30 described above may also be included in another information processing device configured to include a computer including a processor and a memory, such as a smartphone or a tablet terminal. In this case, the dart game device 30 may also transmit/receive information to/from the other information processing device via the communication device 32 or the like. The other information processing device may also include at least one of the components such as the display device 34, the audio output device 35, the image capturing device 39, and the detection device 40. Alternatively, the other information processing device may also include at least one of the functional units such as the image capturing control unit 111, the detection control unit 112, the training execution unit 113, the estimation result acquisition unit 114, and the output control unit 115. Still alternatively, the other information processing device may also store at least one of the machine learning model 121, the score information 122, and the like.

The present invention is not limited to each of the embodiments described above, and can variously be changed within a scope disclosed in the claims, and the embodiment obtained by appropriately combining respective technical means disclosed in the different embodiments with each other is also included in a technical scope of the present invention.

### Reference Signs List

- 30: Dart game device
- 31: Dart board
- 32: Communication device
- 33: Operation device
- 34: Display device
- 35: Audio output device
- 36: Card slot
- 37: Card RW unit
- 38: Coin insertion unit
- 39: Image capturing device
- 40: Detection device
- 41, 41a, 41b: Microphone
- 42, 42a, 42b: Acceleration sensor
- 43: Membrane switch
- 44: Control device
- 45: Processor
- 46: Memory
- 110: Control unit
- 111: Image capturing control unit
- 112: Detection control unit
- 113: Training execution unit
- 114: Estimation result acquisition unit
- 115: Output control unit
- 120: Storage unit
- 121: Machine learning model
- 122: Score information

## Claims

1. A hit location estimation system comprising:
a storage unit that stores a machine-trained machine learning model configured to output, when image data generated on the basis of capturing of an image of a target upon throwing of a throwing instrument in a throwing game and detection data generated on the basis of detection of contact of the thrown throwing instrument with the target or another object is input to the machine learning model, a result of estimating a location on the target hit by the throwing instrument;
an image capturing unit that generates the image data on the basis of the capturing of the image of the target upon the throwing of the throwing instrument in the throwing game;
a detection unit that generates the detection data on the basis of the detection of the contact of the thrown throwing instrument with the target or the other object;
an acquisition unit that acquires the result of estimating the location on the target hit by the throwing instrument, the result being is output by inputting the image data and the detection data to the machine learning model; and
a display unit that displays the estimation result.

2. The hit location estimation system according to claim 1, wherein the detection unit detects a sound caused by the contact of the thrown throwing instrument with the target or the other object.

3. The hit location estimation system according to claim 1, wherein the detection unit detects a pressure caused by the contact of the thrown throwing instrument with the target and exerted on the target.

4. The hit location estimation system according to claim 1, wherein the detection unit detects an impact caused by the contact of the thrown throwing instrument with the target or the other object.

5. The hit location estimation system according to claim 1, wherein
the machine learning model is configured to further output a degree of reliability of the estimation result when the image data and the detection data are input to the machine learning model,
the acquisition unit further acquires the degree of reliability output by inputting the image data and the detection data to the machine learning model, and
the display unit controls details of display of the estimation result on the basis of the degree of reliability.

6. The hit location estimation system according to claim 5, wherein the display unit further displays the degree of reliability.

7. The hit location estimation system according to claim 5, wherein the display unit displays information for promoting inputting of a result of the throwing in the throwing game when the degree of reliability is less than a predetermined threshold.

8. The hit location estimation system according to claim 5, wherein
the image capturing unit generates, when the degree of reliability is less than a predetermined threshold, second image data including at least a portion of the target upon the throwing of the throwing instrument in the throwing game,
the acquisition unit acquires a second result of estimating the location on the target hit by the throwing instrument, the result being output by inputting at least the second image data to the machine learning model, and
the display unit displays the second estimation result.

9. A hit location estimation method to be implemented by an information processing device accessible to a storage unit that stores a machine-trained machine learning model configured to output, when image data generated on the basis of capturing of an image of a target upon throwing of a throwing instrument in a throwing game and detection data generated on the basis of detection of contact of the thrown throwing instrument with the target or another object is input to the machine learning model, a result of estimating a location on the target hit by the throwing instrument, the method comprising:
a step of controlling an image capturing device to generate the image data on the basis of the capturing of the image of the target upon the throwing of the throwing instrument in the throwing game;
a step of controlling a detection device to generate the detection data on the basis of the detection of the contact of the thrown throwing instrument with the target or the other object;
a step of acquiring the result of estimating the location on the target hit by the throwing instrument, the result being output by inputting the image data and the detection data to the machine learning model; and
a step of causing a display device to display the estimation result.

10. A program for causing an information processing device accessible to a storage unit that stores a machine-trained machine learning model configured to output, when image data generated on the basis of capturing of an image of a target upon throwing of a throwing instrument in a throwing game and detection data generated on the basis of detection of contact of the thrown throwing instrument with the target or another object is input to the machine learning model, a result of estimating a location on the target hit by the throwing instrument to function as:
an image capturing control unit that controls an image capturing device to generate the image data on the basis of the capturing of the image of the target upon the throwing of the throwing instrument in the throwing game;
a detection control unit that controls a detection device to generate the detection data on the basis of the detection of the contact of the thrown throwing instrument with the target or the other object;
an acquisition unit that acquires the result of estimating the location on the target hit by the throwing instrument, the result being output by inputting the image data and the detection data to the machine learning model; and
a display control unit that causes a display device to display the estimation result.

11. A hit location estimation system comprising:
a storage unit that stores a machine-trained machine learning model configured to output, when in a throwing game a sound caused by contact of a throwing instrument thrown with a target or another object is input to the machine learning model, a result of estimating a location on the target hit by the throwing instrument;
a detection unit that detects the sound caused by the contact of the throwing instrument thrown with the target or the other object in the throwing game;
an acquisition unit that acquires the result of estimating the location on the target hit by the throwing instrument, the result being output by inputting the sound to the machine learning model; and
a display unit that displays the estimation result.

12. The hit location estimation system according to claim 11, wherein
the detection unit is disposed at a predetermined position with respect to the target, and
the target has a plurality of segments delimited by distances and directions thereof from a center of the target.
